# EUROPÄISCHE PATENTSCHRIFT

(11) **EP 4 640 959 B1**
(45) Veröffentlichungstag und Bekanntmachung des Hinweises auf die Patenterteilung: **18.11.2026**
(21) Anmeldenummer: 25167274.7
(22) Anmeldetag: 31.03.2025
(51) Int. Cl.: E02F 9/02, B60F 1/00, B60F 1/04

(54) **ZWEIWEGEFAHRZEUG**
TWO-WAY VEHICLE
VÉHICULE À DEUX VOIES

(30) Priorität: 09.04.2024 DE 102024109788
(43) Veröffentlichungstag der Anmeldung: 29.10.2025
(73) Patentinhaber: Liebherr-Hydraulikbagger GmbH, 88457 Kirchdorf/Iller (DE)
(72) Erfinder: MÜLLER, Michael, 89165 Dietenheim (DE); SCHICK, Marcel, 87700 Memmingen (DE); GRABMAIER, Stefan, 86842 Türkheim (DE)
(74) Vertreter: Lorenz Seidler Gossel Part. mbB

(56) Entgegenhaltungen:
- EP-B1- 3 225 434
- DE-A1- 102007 044 866
- DE-A1- 102011 117 279
- DE-A1- 102022 119 486
- DE-B4- 102015 012 757
- DE-C1- 19 643 240
- FR-A1- 2 671 570

## Beschreibung

Die vorliegende Erfindung betrifft ein Zweiwegefahrzeug, insbesondere einen Zweiwegebagger, gemäß dem Oberbegriff des Anspruchs 1 sowie ein Schienenfahrwerk für einen solchen. DE 10 2022 119486 A1 offenbart ein derartiges Zweiwegefahrzeug gemäß dem Oberbegriff des Anspruchs 1 sowie ein derartiges Schienenfahrwerk gemäß dem Oberbegriff des Anspruchs 15.

Zweiwegefahrzeuge sind aus dem Stand der Technik bekannt und zeichnen sich dadurch aus, dass sie multifunktional einsetzbar sind. Einerseits besitzen derartige Fahrzeuge ein Radfahrwerk und damit Straßentauglichkeit, sodass sie flexibel und unabhängig zum und am Einsatzort verfahren werden können. Andererseits weisen sie ein Schienenfahrwerk auf, das über Aktuatoren in eine Betriebsstellung gebracht und für die Schienenfahrt eingesetzt werden kann. Dadurch können Zweiwegefahrzeuge wie gewöhnliche Schienenfahrzeuge auf Gleisen verfahren, wobei der Antrieb während der Schienenfahrt üblicherweise über eine oder mehrere angetriebene Radachsen des Radfahrwerks oder über das Schienenfahrwerk erfolgt.

Derartige Zweiwegefahrzeuge können für unterschiedliche Arbeitsfunktionen konzipiert sein, beispielsweise als Schienenreinigungsfahrzeuge, Hebezeuge bzw. Krane, Greifer bzw. Materialumschlaggeräte, Hebebühnen, Dumper oder Bagger. Das Schienenfahrwerk kann dabei entweder als Anbaukonstruktion an ein bestehendes, straßentaugliches Fahrzeug montierbar oder in den Grundstahlbau des Unterwagens integriert sein.

Aus der DE 20 2006 017 727 U1 ist ein Zweiwegebagger bekannt, welcher einen gewöhnlichen Unterwagen mit Radfahrwerk besitzt, an dessen Stirnseiten (in Fahrtrichtung gesehen) Anbauten montiert sind, die mittels Hydraulikzylindern um horizontale Schwenkachsen schwenkbare Schienenachsen tragen. Durch Absenken bzw. Runterschwenken der Schienenachsen mittels der Hydraulikzylinder wird die Betriebsstellung für die Schienenfahrt hergestellt, bei der der Zweiwegebagger über das Radfahrwerk angetrieben und über das Schienenfahrwerk auf den Schienen geführt wird. Durch Anheben bzw. Hochschwenken der Schienenachsen mittels der Hydraulikzylinder wird die Betriebsstellung für die Straßenfahrt hergestellt.

Sind die Schienenachsen, so wie bei dem in der DE 20 2006 017 727 U1 offenbarten Gerät, fest, d.h. ohne Möglichkeit einer Pendelbewegung um eine zur Fahrtrichtung parallele Längsachse an die Grundstahlbaustruktur des Fahrzeugs angebunden, können eventuelle Höhenunterschiede der Schienen aufgrund von Schienenunebenheiten und/oder -verwindungen (nachfolgend nur noch als Schienenunebenheiten bezeichnet) nicht ausreichend ausgeglichen werden. Dies kann dazu führen, dass ein Schienenrad beim Überfahren einer solchen Schienenunebenheit von der Schiene abhebt, was zu einer unsicheren Führung und im schlimmsten Fall zu einem Entgleisen des Zweiwegefahrzeugs führen kann.

Darüber hinaus besitzt eine Reihe von Zweiwegefahrzeugen nicht nur eine Fahrstellung für die Schienenfahrt, bei der die Schienenachsen lediglich zur Führung des Fahrzeugs eingesetzt werden (d.h. die Schienenräder und die Straßenräder kontaktieren gemeinsam die Schienen), sondern zusätzlich eine weitere Fahrstellung für die Schienenfahrt, bei der die Straßenräder von den Schienen abgehoben sind und das Zweiwegefahrzeug nur über die Schienenräder auf den Schienen aufsitzt und angetrieben wird. Da sich die Schienenachsen in den jeweiligen Fahrstellungen in unterschiedlichen Positionen relativ zum Unterwagen bzw. zu den Radachsen befinden, ergeben sich besondere Herausforderungen bei der Bereitstellung einer Pendelbewegung der Schienenachsen für jede dieser Fahrstellungen.

Der vorliegenden Erfindung liegt daher die Aufgabe zugrunde, ein gattungsgemäßes Zweiwegefahrzeug bereitzustellen, welches unabhängig von der Fahrstellung bei einer Schienenfahrt einen effektiven und schonenden Ausgleich von Schienenunebenheiten und -verwindungen ermöglicht.

Erfindungsgemäß wird diese Aufgabe durch die Kombination der Merkmale des Anspruchs 1 gelöst. Vorteilhafte Ausführungsformen der Erfindung ergeben sich aus den Unteransprüchen und der nachfolgenden Beschreibung.

Demnach wird ein Zweiwegefahrzeug vorgeschlagen, bei dem es sich insbesondere um einen Zweiwegebagger handeln kann. Das Zweiwegefahrzeug besitzt einen Unterwagen, welcher ein Radfahrwerk mit mindestens zwei Radachsen für die Straßenfahrt und ein Schienenfahrwerk mit einer vorderen und einer hinteren Schienenachse für die Schienenfahrt umfasst. Die Radachsen besitzen für die Straßenfahrt ausgebildete Räder bzw. Straßenräder (im Folgenden nur als Räder bezeichnet), während die Schienenachsen für die Schienenfahrt ausgebildete Schienenräder besitzen. Der Unterwagen umfasst weiterhin ein Mittelstück, an welchem die Radachsen angeordnet sind. Mindestens eine der Radachsen ist lenkbar, um das Zweiwegefahrzeug bei der Straßenfahrt (= erste Fahrstellung) lenken zu können. Ferner ist mindestens eine der Radachsen aktiv antreibbar, sodass das Zweiwegefahrzeug bei der Straßenfahrt über das Radfahrwerk angetrieben und gelenkt werden kann. Das Mittelstück kann eine Stahlbaukonstruktion darstellen.

Das Zweiwegefahrzeug besitzt zwei weitere Fahrstellungen für die Schienenfahrt. In einer zweiten Fahrstellung sind die Schienenachsen so weit abgesenkt, dass sowohl die Schienenräder als auch die Räder der Radachsen auf den Schienen aufsitzen. In dieser Fahrstellung wird das Zweiwegefahrzeug über die Schienenräder auf den Schienen geführt und über die Radachsen angetrieben. In einer dritten Fahrstellung sitzt das Zweiwegefahrzeug nur über die Schienenachsen bzw. Schienenräder auf den Schienen auf, während die Räder der Radachsen von den Schienen abgehoben sind. Hierbei wird das Zweiwegefahrzeug über wenigstens eine der Schienenachsen angetrieben. Das Zweiwegefahrzeug umfasst Aktuatoren, mittels welchen die Schienenachsen relativ zum Mittelstück und somit relativ zu den Radachsen zwischen den genannten Fahrstellungen bewegt, insbesondere verschwenkt werden können.

Erfindungsgemäß sind die vordere Schienenachse und die hintere Schienenachse unabhängig voneinander um jeweils eine Pendelachse drehbar gegenüber dem Mittelstück gelagert. Dabei ist das Schienenfahrwerk derart ausgebildet, dass die Pendelachsen unabhängig von der Fahrstellung stets innerhalb einer Mittelebene des Unterwagens parallel zueinander verlaufen. Die Mittelebene ist dabei definiert als die Ebene, die bei horizontal verlaufenden Schienen (und somit einer horizontalen Ausrichtung des Unterwagens) vertikal durch die Längsachse des Unterwagens verläuft, wobei die Längsachse bei einer Geradeausfahrt des Zweiwegefahrzeugs parallel zur Fahrtrichtung verläuft. Somit verlaufen die Pendelachsen in jeder Fahrstellung parallel zur Längsachse des Unterwagens.

Durch die drehbare Lagerung der Schienenachsen am Mittelstück wird sichergestellt, dass Schienenunebenheiten und -verwindungen durch Pendelbewegungen ausgeglichen werden können und alle Schienenräder unabhängig von der Gleisbeschaffenheit stets Schienenkontakt haben. Die Ausgleichsmöglichkeit erhöht sich dadurch, dass nicht nur eine, sondern beide Schienenachsen drehbar mit dem Mittelstück verbunden sind und beide Schienenachsen unabhängig voneinander Pendelbewegungen ausführen können. Ein weiterer Vorteil ist ein gleichbleibendes Fahrwerksverhalten beim Arbeiten über die vordere oder die hintere Schienenachse. Darüber hinaus werden höhere maximal zulässige Traglasten erreicht, da die Schienenräder bei einer Schwerpunktsverlagerung erst später von den Schienen abheben.

Da die Schienenachsen bei den unterschiedlichen Fahrstellungen für die Schienenfahrt unterschiedliche Positionen relativ zum Mittelstück einnehmen, kann es abhängig vom Ort der Drehlagerung der Schienenachsen vorkommen, dass sich die Orientierungen der Pendelachsen von Fahrstellung zu Fahrstellung unterscheiden. Wären beispielsweise die Schienenachsen an verschwenkbaren Rahmenteilen um die Pendelachsen drehbar gelagert, so würden diese beim Verschwenken der Rahmenteile ebenfalls verschwenken. Wären die Pendelachsen z.B. in der zweiten Fahrstellung parallel zur Längsachse des Unterwagens ausgerichtet, so verliefen sie in der dritten Fahrstellung, bei der die Schienenachsen weiter nach unten verschwenkt sind, dazu gekippt.

Bei einem Auftreten von Schienenunebenheiten ergäben sich dadurch ungewollte parasitäre Bewegungen der Schienenachsen um vertikale Hochachsen. Die Schienenachsen würden sich mit anderen Worten nicht nur um eine horizontale Drehachse (Pendelachse), sondern auch um eine vertikale Drehachse drehen, was zu einem erhöhten Spurkranzverschleiß an den Schienenrädern, einer erhöhten Beanspruchung der Schienen sowie zu einer erhöhten Aufklettergefahr (Entgleisungsgefahr) führen würde. Derartige parasitäre Lenkbewegungen der Schienenachsen um die Hochachse werden durch die erfindungsgemäße fahrstellungsunabhängige Ausrichtung der Pendelachsen vermieden. Bevorzugt verlaufen die Pendelachsen innerhalb der Mittelebene koaxial zueinander.

Bei den Pendelachsen handelt es sich um definierte Drehachsen. Diese werden insbesondere über entsprechende Drehlager bereitgestellt und nicht etwa über eine bewegliche Lagerung der Schienenachsen durch entsprechende Ausgestaltung der Lagerstellen (in diesem Fall wären die Drehachsen nicht "definiert").

In einer möglichen Ausführungsform ist vorgesehen, dass das Schienenfahrwerk ein vorderes und ein hinteres Endstück mit jeweils einem ersten und einem zweiten Rahmenteil umfasst. Die Endstücke bzw. die zweiten Rahmenteile können als Anbauteile ausgebildet sein, die über entsprechende Verbindungsmittel (z.B. Bolzen- und/oder Schraubenverbindungen) am Mittelstück montierbar sind. Alternativ können die Endstücke fest bzw. untrennbar mit dem Mittelstück verbunden und somit ein integraler Bestandteil des Unterwagens sein. Am ersten Rahmenteil jedes Endstücks ist die jeweilige Schienenachse gelagert, während das zweite Rahmenteil jedes Endstücks beweglich mit dem Mittelstück verbunden ist. Darüber hinaus sind die beiden Rahmenteile jedes Endstücks beweglich miteinander verbunden. Die ersten Rahmenteile können jeweils zwei Lagerstellen zur Lagerung bzw. Befestigungsstellen zur Befestigung der Schienenachse umfassen.

In einer weiteren möglichen Ausführungsform ist vorgesehen, dass die ersten und zweiten Rahmenteile über ein Drehlager drehbar miteinander verbunden sind, wobei die Drehachsen der Drehlager den Pendelachsen entsprechen. Die zweiten Rahmenteile sind dabei über einen Bewegungsmechanismus, welcher die genannten Aktuatoren zum Einnehmen der verschiedenen Fahrstellungen umfasst, beweglich am Mittelstück gelagert. Bei dieser Ausführungsform erfolgt die eine Pendelbewegung der Schienenachse ermöglichende Drehung um die Pendelachse zwischen den beiden Rahmenteilen. Damit sich beim Einnehmen der unterschiedlichen Fahrstellungen keine Verkippung der Pendelachsen ergibt, erfolgt die Bewegung der zweiten Rahmenteile relativ zum Mittelstück über den Bewegungsmechanismus derart, dass die Orientierungen der Pendelachsen beibehalten werden und kein Verkippen der ersten Rahmenteile erfolgt.

Der Bewegungsmechanismus kann eine Linearführung umfassen, sodass die zweiten Rahmenteile linear, insbesondere vertikal, verschieblich am Mittelstück gelagert sind. Die Linearführung kann eine oder mehrere Führungsschienen zwischen dem zweiten Rahmenteil und dem Mittelstück jedes Endstücks umfassen. Alternativ oder zusätzlich kann der Bewegungsmechanismus einen Scherenmechanismus umfassen, über welchen das Mittelstück linear, insbesondere vertikal, angehoben oder abgesenkt werden kann. Alternativ oder zusätzlich kann der Bewegungsmechanismus eine Parallelführung umfassen, über die die zweiten Rahmenteile mit dem Mittelstück gekoppelt und verkippungsfrei bewegbar sind.

In einer alternativ möglichen Ausführungsform ist vorgesehen, dass die Drehlagerungen zur Ermöglichung der Pendelbewegungen der Schienenachsen nicht zwischen den ersten und zweiten Rahmenteilen, sondern zwischen den zweiten Rahmenteilen und dem Mittelstück angeordnet sind. Hierbei sind die zweiten Rahmenteile jeweils über ein Drehlager drehbar mit dem Mittelstück verbunden, wobei die Drehachsen der Drehlager den Pendelachsen der Schienenachsen entsprechen. Die ersten und zweiten Rahmenteile sind vorzugsweise in Bezug auf die jeweilige Pendelachse rotationsstarr miteinander verbunden. Mit anderen Worten erfolgt vorzugsweise jeweils die Pendelbewegung der Schienenachse durch das Drehlager zwischen zweitem Rahmenteil und Mittelstück und nicht zwischen den ersten und zweiten Rahmenteilen. Die rotationsstarre Verbindung der ersten und zweiten Rahmenteile um die Pendelachse schließt aber nicht aus, dass diese anderweitig beweglich, beispielsweise um eine andere (d.h. nicht parallel zur Pendelachse verlaufende) Achse drehbar bzw. schwenkbar miteinander verbunden sind. In einer bevorzugten Ausgestaltung sind die ersten und zweiten Rahmenteile um eine Schwenkachse, welche nicht parallel zur Pendelachse und verläuft, schwenkbar miteinander verbunden.

Bei dieser Ausführungsform bleiben die die Pendelachsen definierenden Drehlager unabhängig von der Fahrstellung an der gleichen Position relativ zum Mittelstück, wodurch die Pendelachsen unabhängig von der Fahrstellung gleichbleiben. Die Bewegung der Schienenachsen in die unterschiedlichen Fahrstellungen erfolgt insbesondere über eine Bewegung der ersten Rahmenteile. Eine solche Ausführungsform zeichnet sich durch eine simplere Anbindung der Schienenachsen an die ersten Rahmenteile aus, da die Bewegung der ersten Rahmenteile über weniger Freiheitsgrade erfolgen kann als bei einer um die Pendelachsen drehbaren Anbindung der Schienenachsen an die ersten Rahmenteile.

In einer weiteren möglichen Ausführungsform ist vorgesehen, dass die ersten und zweiten Rahmenteile schwenkbar miteinander verbunden sind, wobei die verschiedenen Fahrstellungen durch Verschwenken der ersten Rahmenteile relativ zu den zweiten Rahmenteilen erreicht werden. Die Schwenkachsen verlaufen insbesondere horizontal und bevorzugt parallel zu den jeweiligen Schienenachsen. Die erste Fahrstellung wird insbesondere dadurch erreicht, dass die ersten Rahmenteile nach oben verschwenkt werden. Zum Erreichen der dritten Fahrstellung werden die ersten Rahmenteile nach unten in Richtung Schienen verschwenkt. Die zweite Fahrstellung entspricht einer Schwenkposition zwischen den ersten und dritten Fahrstellungen.

In einer weiteren möglichen Ausführungsform ist vorgesehen, dass die ersten Rahmenteile relativ zu den zweiten Rahmenteilen über die genannten Aktuatoren aktiv verschwenkbar sind, wobei die Aktuatoren als Kolben-Zylinder-Einheiten, insbesondere als hydraulische Schwenkzylinder ausgebildet sind. Die verschiedenen Schwenkpositionen der ersten Rahmenteile und somit die verschiedenen Fahrstellungen werden durch Ein- und Ausfahren der Schwenkzylinder erreicht. Letztere sind zwischen den ersten und zweiten Rahmenteilen angeordnet und an diesen jeweils gelenkig gelagert. Durch die definierte Kinematik der ersten Rahmenteile können die Schwenkzylinder über reine Drehlager an die Rahmenteile angebunden werden, sodass aufwändigere Lager wie z.B. sphärische Lager entfallen können.

In einer weiteren möglichen Ausführungsform ist vorgesehen, dass sich die Drehlager an (in Fahrtrichtung gesehen) vorderen und hinteren Stirnseiten des Mittelstücks befinden. Dadurch ergibt sich eine besonders kompakte Bauweise des Unterwagens.

In einer weiteren möglichen Ausführungsform ist vorgesehen, dass die Endstücke jeweils über ein erstes Drehlager und ein entlang der Pendelachse vom ersten Drehlager beabstandetes zweites Drehlager am Mittelstück gelagert ist. Durch die doppelte Lagerung jedes Endstücks über zwei axial voneinander beabstandete Drehlager können nicht nur Vertikal- und Horizontalkräfte, sondern auch Momente effektiv über die Drehlager zwischen Endstück und Mittelstück übertragen werden. Insbesondere kann das zweite Drehlager, welches weiter von der Schienenachse entfernt ist als das erste Drehlager, als Momentenstütze dienen, welches primär Drehmomente bzw. Kippmomente zwischen Endstück und Mittelstück überträgt. Das erste Drehlager kann jeweils primär der Übertragung von Vertikal- und Horizontalkräften zwischen Endstück und Mittelstück dienen. Die zweiten Drehlager können als Loslager ausgebildet sein.

Vorzugsweise ist wenigstens eine Radachse ebenfalls um eine koaxial zu den Pendelachsen der Schienenachsen verlaufende Pendelachse, welche nachfolgend als Radfahrwerkpendelachse bezeichnet wird, schwenkbar gelagert. Derartige Pendelachsen für eine oder mehrere Radachsen sind an sich beispielsweise von Hydraulikbaggern bekannt. Die zweiten Drehlager können nun auf einem die Radfahrwerkpendelachse bildenden gemeinsamen Pendelbolzen oder auf separaten, koaxial dazu gelagerten Bolzen gelagert sein. Dabei fallen die Pendelachsen der Schienenachsen und die Radfahrwerkpendelachse zusammen, d.h. die Drehlagerungen erlauben Pendelbewegungen der Schienenachsen um die Radfahrwerkpendelachse des Zweiwegefahrzeugs. Die Verwendung des Pendelbolzens (oder dazu koaxialer Bolzen) zur Drehlagerung der Endstücke und zur Momentenübertragung ergibt einen besonders kompakten Aufbau des Unterwagens.

In einer weiteren möglichen Ausführungsform ist vorgesehen, dass das zweite Rahmenteil mindestens eines Endstücks, vorzugsweise beider Endstücke, über mindestens eine Lageranordnung mit dem Mittelstück gekoppelt ist, wobei die Lageranordnung zwei Steifigkeiten bereitstellen kann und zwischen einem Dämpfungsmodus mit vergleichsweise niedriger Steifigkeit und einem Sperrmodus mit vergleichsweise höherer Steifigkeit umschaltbar ist. Mit anderen Worten ist die Steifigkeit, d.h. der Widerstand, den die Lageranordnung einer Pendelbewegung zwischen Schienenachse und Mittelstück entgegensetzt, im Sperrmodus größer als im Dämpfungsmodus. Der Dämpfungsmodus kommt insbesondere bei der Schienenfahrt zum Einsatz, bei der ein möglichst effektiver Ausgleich von Schienenunebenheiten und eine optimale Fahrdynamik im Vordergrund stehen. Der Sperrmodus kommt dagegen insbesondere in einem schienengebundenen Arbeitsbetrieb des Zweiwegefahrzeugs zum Einsatz, bei dem eine möglichst steife Fahrwerksabstimmung zum Erreichen einer ausreichenden Stabilität erforderlich ist. Jedes Endstück ist vorzugsweise über zwei Lageranordnungen mit dem Mittelstück gekoppelt.

In einer weiteren möglichen Ausführungsform ist vorgesehen, dass die Lageranordnung zwei getrennte Baugruppen umfasst, von denen eine erste Baugruppe die höhere Steifigkeit bereitstellt und vorzugsweise ein Elastomerelement (z.B. eine Schichtfeder), umfasst, und von denen eine zweite Baugruppe die niedrigere Steifigkeit bereitstellt und zum Umschalten in den Sperrmodus deaktivierbar ist. Mit dem Deaktivieren der zweiten Baugruppe ist hierbei insbesondere gemeint, dass der durch die zweite Baugruppe bereitgestellte zusätzliche Weg gesperrt wird, sodass eine Stauchung der Lageranordnung nur noch über die erste Baugruppe erfolgt. Die Baugruppen zeichnen sich insbesondere dadurch aus, dass sie unabhängig voneinander ein- und ausgebaut werden können und keine ineinandergreifenden Teile besitzen, welche einen gemeinsamen Austausch oder Einbau beider Baugruppen erfordern. Dadurch besitzt die Lageranordnung einen einfachen Aufbau, der zudem einfach zu reparieren bzw. zu warten ist.

In einer weiteren möglichen Ausführungsform ist vorgesehen, dass die zweite Baugruppe ein durch die erste Baugruppe kontaktierbares, verschiebbar gelagertes Kontaktelement umfasst, welches zum Umschalten in den Sperrmodus verriegelbar und zum Umschalten in den Dämpfungsmodus entriegelbar ist. Im Sperrmodus ist eine Verschiebung des Kontaktelements blockiert, während im Dämpfungsmodus eine Verschiebung des Kontaktelements mit der niedrigeren Steifigkeit erfolgt.

In einer weiteren möglichen Ausführungsform ist vorgesehen, dass die zweite Baugruppe einen Hydraulikzylinder mit einem in einem Zylindergehäuse verschiebbar gelagerten Kolben umfasst, welcher das Kontaktelement darstellt oder mit diesem verbunden ist. Vorzugsweise umfasst die zweite Baugruppe ein Sperrventil, welches in einer Sperrstellung eine Druckkammer bzw. den Kolbenraum des Hydraulikzylinders hydraulisch absperrt, sodass sich der Kolben und somit das Kontaktelement nicht mehr bewegen kann. Das Sperrventil ist insbesondere Teil eines Hydraulikkreises des Zweiwegefahrzeugs, über welchen die mindestens eine Lageranordnung betreibbar ist. Die zuvor erwähnten Schwenkzylinder können über denselben oder einen separaten Hydraulikkreis betätigbar sein.

In einer weiteren möglichen Ausführungsform ist vorgesehen, dass zumindest eine der Schienenachsen einen Schienenachsenantriebsmechanismus umfasst, über welchen die Schienenachse und somit das Zweiwegefahrzeug in der dritten Fahrstellung zum Verfahren auf Schienen antreibbar ist. Der Schienenachsenantriebsmechanismus kann zusammen mit der Schienenachse um die zugehörige Pendelachse relativ zum Mittelstück drehbar und über die Aktuatoren relativ zum Mittelstück in die verschiedenen Fahrstellungen bewegbar sein.

In einer weiteren möglichen Ausführungsform ist vorgesehen, dass das Zweiwegefahrzeug einen drehbar auf dem Unterwagen gelagerten Oberwagen umfasst, welcher beispielsweise einen Ausleger eines Kranaufbaus, einen Baggerausleger eines Baggeraufbaus, eine Hebebühne oder einen beliebigen anderen Aufbau zum Ausführen einer oder mehrerer Arbeitsfunktionen umfassen kann. Bevorzugt handelt es sich bei dem Zweiwegefahrzeug um einen Zweiwegebagger.

Der Unterwagen und der Oberwagen sind vorzugsweise so ausgebildet, dass in wenigstens einer definierten Oberwagenstellung, vorzugsweise in zwei definierten Oberwagenstellungen, der Gesamtschwerpunkt von Oberwagen und Mittelstück (d.h. insbesondere der Gesamtschwerpunkt des Zweiwegefahrzeugs ohne Berücksichtigung des Schienenfahrwerks bzw. der Endstücke) innerhalb der Mittelebene des Unterwagens und somit in einer Ebene mit den Pendelachsen liegt. Hierdurch liegt kein Drehmoment um die Pendelachsen vor, was zu einer Verringerung der Drehmomentbelastung auf die Verbindungselemente und Lagerstellen führt.

Die Aktuatoren zum Bewegen der Schienenachsen in die jeweiligen Fahrstellungen sind vorzugsweise als Schwenkzylinder ausgebildet, wobei das Zweiwegefahrzeug einen Hydraulikkreis zum Betätigen der Hydraulikzylinder umfasst. Das Zweiwegefahrzeug umfasst vorzugsweise eine Steuerung, um die Aktuatoren zu steuern und die Schienenachsen automatisch in die gewünschte Fahrstellung zu bewegen. Die Steuerung kann bevorzugt eine Hydraulikpumpe und/oder ein Steuerventil des genannten Hydraulikkreises ansteuern, um die Schwenkzylinder zu betätigen.

Die vorliegende Erfindung betrifft ferner ein Schienenfahrwerk für ein erfindungsgemäßes Zweiwegefahrzeug, welches die zuvor beschriebenen Endstücke umfasst. Letztere können gemäß jeder beliebigen der zuvor beschriebenen Ausführungsformen ausgestaltet sein. Die Endstücke sind als Anbaukonsolen ausgestaltet und besitzen Verbindungselemente, um sie mit dem bestehenden Unterwagen eines erfindungsgemäßen Zweiwegefahrzeugs verbinden zu können.

Weitere Merkmale, Einzelheiten und Vorteile der Erfindung ergeben sich aus den nachfolgend anhand der Figuren erläuterten Ausführungsbeispielen. Es zeigen:
- Figur 1:: eine schematische perspektivischen Darstellung des Unterwagens eines Ausführungsbeispiels des erfindungsgemäßen Zweiwegefahrzeugs;
- Figuren 2a-b:: schematische Seitenansichten des Unterwagens eines Ausführungsbeispiels des erfindungsgemäßen Zweiwegefahrzeugs in den zweiten und dritten Fahrstellungen;
- Figur 3:: eine perspektivische Ansicht eines Endstücks des erfindungsgemäßen Zweiwegefahrzeugs gemäß einem Ausführungsbeispiel; und
- Figuren 4a-6b:: schematische Seitenansichten des Unterwagens dreier weiterer Ausführungsbeispiele des erfindungsgemäßen Zweiwegefahrzeugs, jeweils gezeigt in den zweiten und dritten Fahrstellungen.

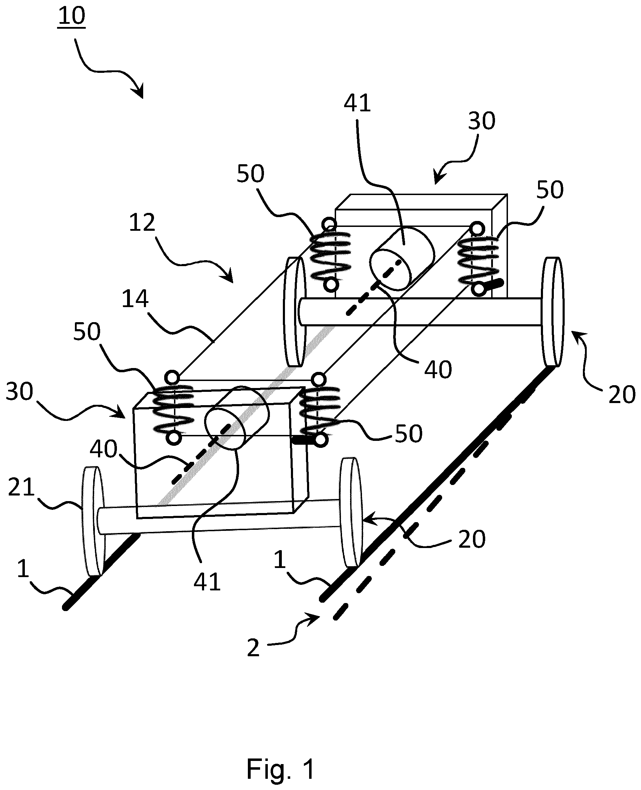

Die Figur 1 zeigt den Unterwagen 12 eines Ausführungsbeispiels des erfindungsgemäßen Zweiwegefahrzeugs 10, wobei der Aufbau des Unterwagens 12 nur grob schematisch dargestellt ist. Dabei kann es sich um den Unterwagen 12 eines Zweiwegebaggers handeln. Der Unterwagen 12 umfasst ein Mittelstück 14, welches ein hier nicht dargestelltes Radfahrwerk mit mindestens zwei Radachsen trägt. An den in Fahrtrichtung gesehen vorderen und hinteren Stirnseiten des Mittelstücks 14 befinden sich zwei Endstücke 30, welche jeweils eine Schienenachse 20 tragen. Die beiden Endstücke 30 mit den Schienenachsen 20 bilden ein Schienenfahrwerk des Zweiwegefahrzeugs 10.

In der gezeigten Ansicht befindet sich das Zweiwegefahrzeug 10 auf Schienen 1, welche als zwei durchgezogene Linien dargestellt sind. Dabei ist eine der Schienen 1 im Vergleich zu deren nominalen Lage (gezeigt als gestrichelte Linie) und somit im Vergleich zur anderen Schiene 1 erhöht. Aus dieser Verwindung 2 ergibt sich ein Höhenunterschied zwischen den beiden Schienen 1, der bei einer rotationsstarren Anbindung der Schienenachsen 20 bzw. Endstücke 30 an das Mittelstück 14 dazu führen würde, dass eines der Schienenräder von der Schiene 1 abhebt.

Um derartige Schienenverwindungen und -unebenheiten ausgleichen zu können, sind die Endstücke 30 über Drehlager 41 drehbar mit dem Mittelstück 14 verbunden. Die Drehlager 41 sind so angeordnet, dass die durch sie definierten Drehachsen 40 koaxial zueinander innerhalb der Mittelebene des Unterwagens 12 liegen. Die Drehachsen 40 bilden Momentandrehpole, um die die vorderen und hinteren Schienenachsen 20 unabhängig voneinander pendeln können, sodass auch beim Vorliegen eines Höhenunterschieds zwischen den beiden Schienen 1 alle Schienenräder 21 auf den Schienen 1 aufliegen. Diese Drehachsen 40 bilden daher Pendelachsen 40 für die Schienenachsen 20.

Das Zweiwegefahrzeug 10 kann mehrere Lageranordnungen 50 umfassen, welche jeweils paarweise zwischen den Endstücken 30 und dem Mittelstück 14 angeordnet sind. Im einfachsten Fall können diese, wie in der Figur 1 dargestellt, als Federelemente ausgebildet sein, um die Pendelbewegungen der Schienenachsen 20 gegenüber dem Mittelstück 14 zu hemmen.

Gemäß einer bevorzugten Ausführungsform können die Lageranordnungen 50 zwei Betriebsmodi aufweisen, zwischen denen sie aktiv umschaltbar sind. In einem Dämpfungsmodus, welcher insbesondere für die Schienenfahrt eingesetzt wird, kann jede der Lageranordnungen 50 eine niedrigere Steifigkeit bereitstellen als in einem Sperrmodus, welcher insbesondere in einem schienengebundenen Arbeitsbetrieb des Zweiwegefahrzeugs 10 zum Einsatz kommt. Im Sperrmodus ergibt sich durch die in der Figur 1 gezeigte Anordnung der Lageranordnungen 50 eine viereckige Stützbasis mit im Wesentlichen ein Rechteck bildenden Kippkanten (wobei auch andere Anordnungen denkbar sind). Die Lageranordnungen 50 können jeweils eine Reihenschaltung eines Elastomerelements zum Bereitstellen der höheren Steifigkeit und eines Hydraulikzylinders umfassen, wobei letzterer durch eine Verschiebung eines als verstellbarer mechanischer Anschlag fungierenden Kolbens die niedrigere Steifigkeit bereitstellt und vorzugsweise durch ein Sperrventil "deaktivierbar" ist.

Das Zweiwegefahrzeug 10 besitzt drei unterschiedliche Fahrstellungen. In einer ersten Fahrstellung für die Straßenfahrt sind die Schienenachsen 20 angehoben und der Unterwagen 12 sitzt nur über die Räder 16 der Radachsen auf dem Boden auf und kann über diese verfahren werden (z.B. auf einer öffentlichen Straße oder auf unebenem Gelände). In einer zweiten Fahrstellung für die Schienenfahrt sind die Schienenachsen 20 über einen noch zu beschreibenden Betätigungsmechanismus so weit abgesenkt, dass die Räder 16 der Radachsen auf den Schienen 1 aufsitzen und gleichzeitig die Schienenräder 21 der Schienenachsen 20 auf den Schienen 1 aufsitzen, sodass das Zweiwegefahrzeug 10 über die Radachsen angetrieben und über die Schienenachsen 20 auf den Schienen 1 geführt wird. In einer dritten Fahrstellung für die Schienenfahrt sind die Schienenachsen 20 über den Betätigungsmechanismus weiter abgesenkt, sodass das Zweiwegefahrzeug 10 nur noch über die Schienenräder 21 auf den Schienen 1 aufsitzt und die Räder 16 der Radachsen in der Luft hängen. Der Antrieb erfolgt dann über einen Schienenachsenantriebsmechanismus einer oder mehrerer Schienenachsen 20.

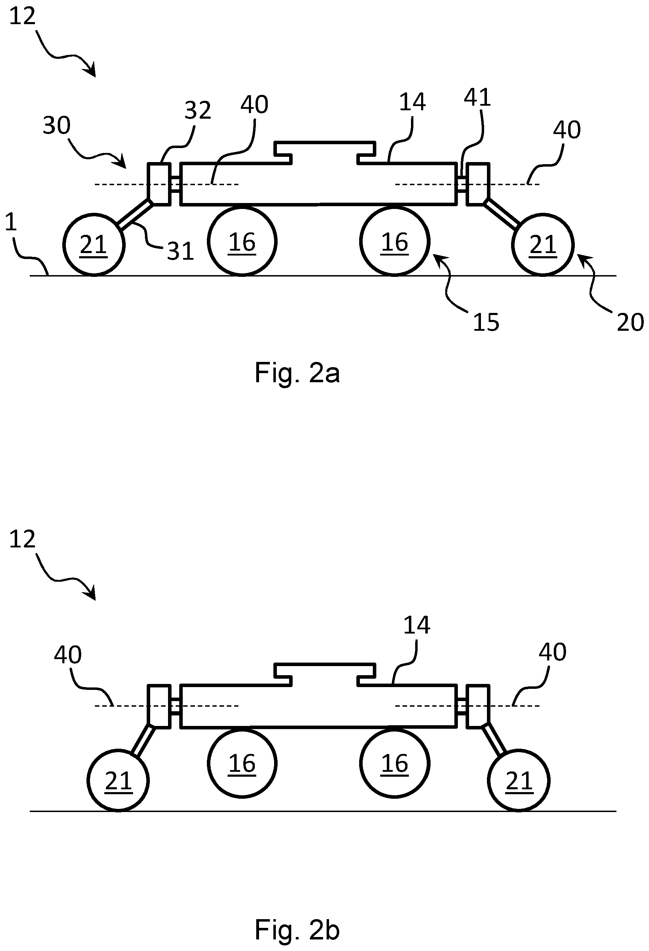

Die Figuren 2a und 2b zeigen den Unterwagen 12 eines Ausführungsbeispiels des erfindungsgemäßen Zweiwegefahrzeugs 10 in einer schematischen Seitenansicht. Hierbei sind nun die Räder 16 der Radachsen 15 eingezeichnet, von denen mindestens eine Radachse über einen nicht dargestellten Antriebsstrang des Mittelstücks 14 antreibbar ist. Es ist der prinzipielle Aufbau der Endstücke 30 dieses Ausführungsbeispiels zu erkennen. Jedes der Endstücke 30 umfasst ein erstes Rahmenteil 31, an welchem die jeweilige Schienenachse 20 gelagert ist, sowie ein über das bereits beschriebene Drehlager 41 um die Pendelachse 40 drehbar mit dem Mittelstück 14 gekoppeltes zweites Rahmenteil 32. In den Figuren 2a-b sind die Schienenräder 21 der Schienenachsen 20 zu erkennen. Ferner ist in den Figuren 2a-b schematisch angedeutet, dass das Mittelstück 14 einen Drehkranz zur drehbaren Lagerung eines Oberwagens besitzen kann.

Die ersten und zweiten Rahmenteile 31, 32 sind in Bezug auf die Pendelachse 40 rotationsstarr miteinander verbunden, sodass eine Drehung eines zweiten Rahmenteils 32 um die Pendelachse 40 zu einer entsprechenden Pendelbewegung der zugeordneten Schienenachse 20 führt. Die ersten und zweiten Rahmenteile 31, 32 sind aber nicht starr, sondern über den genannten Betätigungsmechanismus beweglich miteinander verbunden. Durch Bewegung der ersten Rahmenteile 31 relativ zu den zweiten Rahmenteilen 32 werden die Schienenachsen 20 in die unterschiedlichen Fahrstellungen bewegt.

Bei dem in den Figuren 2a-b gezeigten Ausführungsbeispiel sind die ersten Rahmenteile 31 um horizontale und parallel zu den Schienenachsen 20 verlaufende Schwenkachsen schwenkbar mit den zweiten Rahmenteilen 32 gekoppelt, wobei der Betätigungsmechanismus nicht dargestellte Aktuatoren umfasst, die zwischen den ersten und zweiten Rahmenteilen 31, 32 verbaut sind. Dabei kann es sich insbesondere um hydraulische Schwenkzylinder handeln, die gelenkig mit den ersten und mit den zweiten Rahmenteilen 31, 32 gekoppelt sind. Die Schienenachsen 20 werden dann durch Ein- und Ausfahren der Schwenkzylinder um die horizontalen Schwenkachsen verschwenkt, um die unterschiedlichen Fahrstellungen einzunehmen. Die ersten Rahmenteile 31 stellen somit radial gelagerte Schwenkrahmen dar.

Die Figur 2a zeigt die zweite Fahrstellung, bei der sowohl die Räder 16 als auch die Schienenräder 21 auf den Schienen 1 aufliegen. Die ersten Rahmenteile 31 sind hierfür in eine entsprechende Position nach unten geschwenkt. Die Figur 2b zeigt die dritte Fahrstellung, bei der die ersten Rahmenteile 31 weiter abgesenkt worden sind, sodass die Räder 16 keinen Kontakt zu den Schienen 1 besitzen und der Unterwagen 12 nur über die Schienenräder 21 aufsitzt. Es ist zu erkennen, dass durch die erfindungsgemäße Anordnung der Drehlager 41 zwischen den zweiten Rahmenteilen 32 und dem Mittelstück 14 die Pendelachsen 40 in beiden Fahrstellungen parallel zueinander (d.h. bei horizontal verlaufenden Schienen ebenfalls horizontal) ausgerichtet sind. Dadurch kommt es in keiner der Fahrstellungen bei ausgleichenden Pendelbewegungen der Schienenachsen 20 zu nennenswerten ungewollten Lenkbewegungen um vertikale Hochachsen.

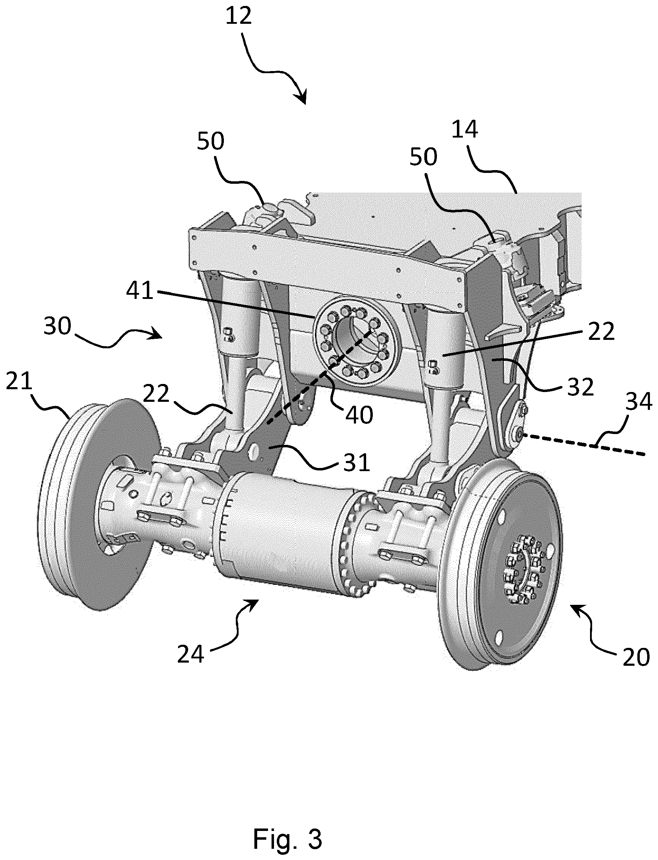

Dass das erste Drehlager 41 jeweils zwischen dem zweiten Rahmenteil 32 und dem Mittelstück 14 angeordnet ist, ist insbesondere eine funktionale Definition. Das erste Drehlager 41 kann tatsächlich zwischen dem zweiten Rahmenteil 32 und dem Mittelstück 14 angeordnet sein, kann aber auch beispielsweise im zweiten Rahmenteil 32 verbaut sein (siehe Fig. 3). Umgekehrt wäre eine Anordnung im Mittelstück 14 denkbar.

Entgegen der schematischen Darstellung der Figuren 2a-bkönnen die zweiten Rahmenteile 32 jeweils über mehr als ein Drehlager 41 um die Pendelachse drehbar mit dem Mittelstück 14 verbunden sein. Beispielsweise ist es denkbar, dass die zweiten Rahmenteile 32 über einen Stützarm mit einem am Mittelstück 14 gelagerten Pendelbolzen verbunden sind, welcher eine Radfahrwerkpendelachse für eine oder mehrere Radachsen bildet. Eine solche Konstruktion hat den Vorteil, dass über das zweite Drehlager Kipp- bzw. Drehmomente zwischen Endstück 30 und Mittelstück 14 übertragen werden können (der Stützarm fungiert hierbei als Momentenstütze), während über das erste Drehlager 41 primär horizontale und vertikale Kräfte in radialer und axialer Richtung übertragen werden können. Hierbei kann das zweite Drehlager ein Loslager bilden, sodass sich insgesamt eine drehbare fliegende Lagerung der Endstücke 30 ergibt, welche für eine definierte Krafteinleitung in axialer Richtung sorgt.

In der Figur 3 ist ein weiteres Ausführungsbeispiel des erfindungsgemäßen Zweiwegefahrzeugs 10 gezeigt, wobei hier eines der Endstücke 30 in einer perspektivischen Ansicht näher dargestellt ist. Es sind die beiden Schwenkzylinder 22 des Endstücks 30 zu erkennen, welche gelenkig zwischen erstem Rahmenteil 31 und zweitem Rahmenteil 32 verbaut sind. Ferner ist die horizontale Schwenkachse 34 eingezeichnet, um die die beiden Rahmenteile 31, 32 schwenkbar miteinander verbunden sind. Ebenfalls ist das Drehlager 41 des zweiten Rahmenteils 32 zu erkennen, welches die Pendelachse 40 definiert. Wie in Fig. 3 zu erkennen ist, kann eine der Schienenachsen 20 einen Schienenachsenantriebsmechanismus 24 besitzen, über welchen die Schienenachse 20 für die Fortbewegung des Zweiwegefahrzeugs 10 in der dritten Fahrstellung aktiv antreibbar ist. Der Schienenachsenantriebsmechanismus 24 kann ein mechanisches Getriebe und/oder einen hydraulischen Antrieb umfassen. In der Fig. 3 sind zwei Lageranordnungen 50 zu erkennen, welche im Bereich der oberen Anlenkpunkte der Schwenkzylinder 22 zwischen zweitem Rahmenteil 32 und Mittelstück 14 verbaut sind.

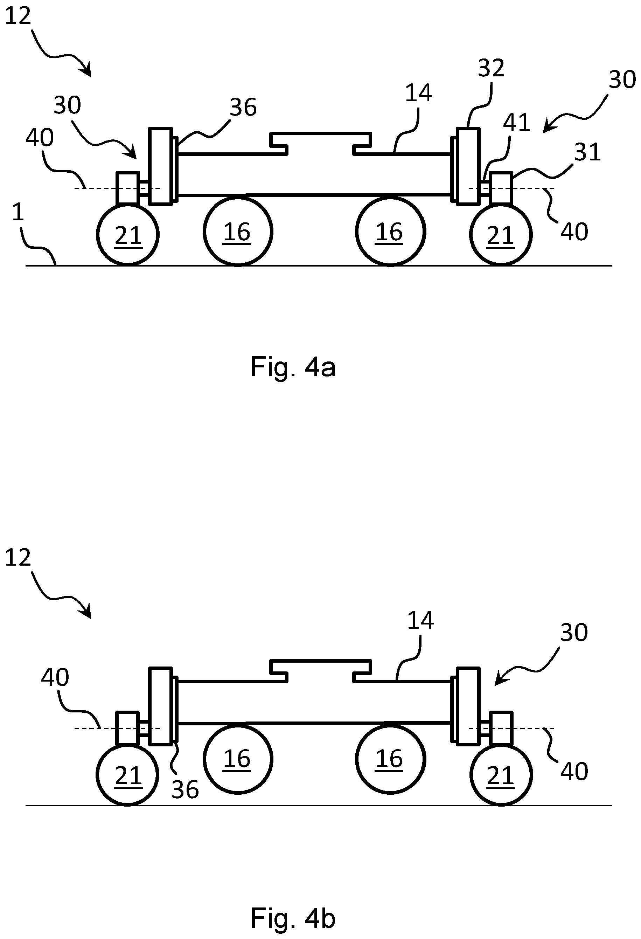

Die Figuren 4a-6b zeigen drei alternative Ausführungsbeispiele, bei denen die Drehlager 41 nicht zwischen den zweiten Rahmenteilen 32 und dem Mittelstück 14, sondern zwischen den ersten und zweiten Rahmenteilen 31 angeordnet sind. Dabei sind die zweiten Rahmenteile 32 über unterschiedliche Betätigungsmechanismen derart mit dem Mittelstück 14 gekoppelt, dass die Pendelachsen 40 trotzdem fahrstellungsunabhängig parallel bzw. koaxial zueinander bleiben. Optional können die zuvor beschriebenen Lageranordnungen 50 jeweils zwischen den ersten und zweiten Rahmenteilen 31, 32 angeordnet sein.

Bei dem Ausführungsbeispiel der Figuren 4a-b sind die zweiten Rahmenteile 32 über Linearführungen 36 mit dem Mittelstück 14 verbunden. Durch eine translationale Relativbewegung zwischen Endstücken 30 und Mittelstück 14 werden die verschiedenen Fahrstellungen (Fig. 4a: zweite Fahrstellung; Fig. 4b: dritte Fahrstellung) eingenommen. Die Endstücke 30 können an den vorderen und hinteren Stirnseiten des Mittelstücks 14 angeordnet sein. Der Rotationsfreiheitsgrad um die Pendelachse 40 kann der einzige Bewegungsfreiheitsgrad zwischen den Rahmenteilen 31, 32 sein.

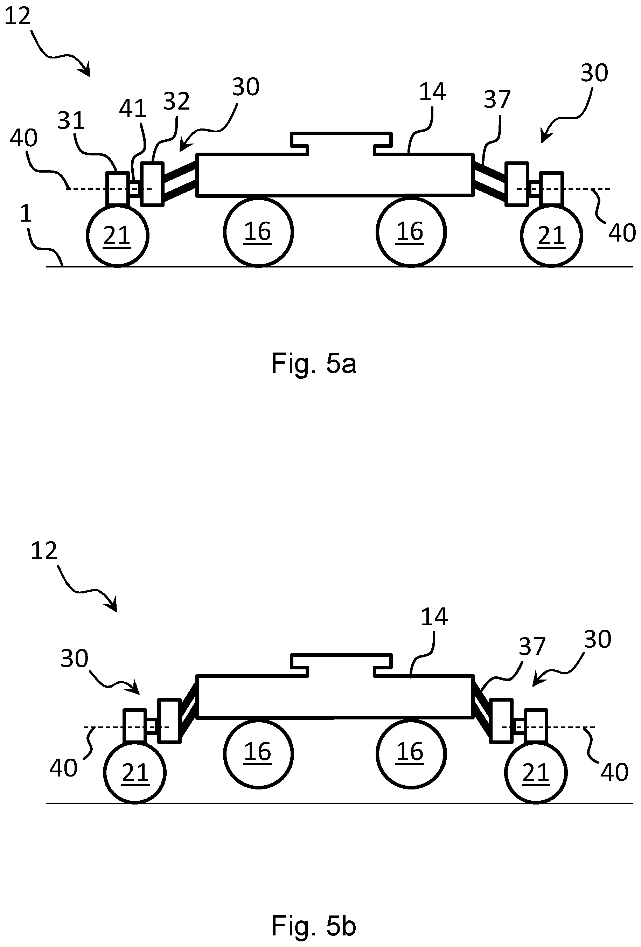

Bei dem Ausführungsbeispiel der Figuren 5a-b sind die zweiten Rahmenteile 32 über Parallelogrammführungen 37 mit dem Mittelstück 14 gekoppelt. Durch eine Schwenkbewegung der parallel zueinander verlaufenden Schwingen der Parallelogrammführung 37 wird das jeweilige Endstück 30 verkippungsfrei in einer Kreisbahn relativ zum Mittelstück 14 bewegt und letzteres dadurch relativ in der Höhe verstellt, um die verschiedenen Fahrstellungen (Fig. 5a: zweite Fahrstellung; Fig. 5b: dritte Fahrstellung) einzunehmen. Die Endstücke 30 können sich an den vorderen und hinteren Stirnseiten des Mittelstücks 14 befinden. Der Rotationsfreiheitsgrad um die Pendelachse 40 kann der einzige Bewegungsfreiheitsgrad zwischen den Rahmenteilen 31, 32 sein.

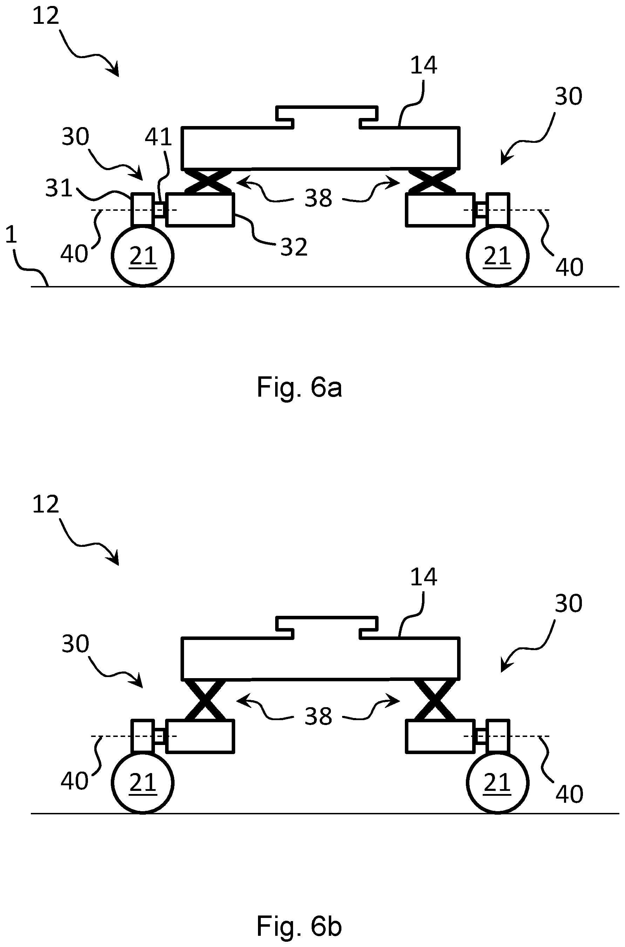

Bei dem Ausführungsbeispiel der Figuren 6a-b sind die zweiten Rahmenteile 32 jeweils über einen Scherenmechanismus 38 mit dem Mittelstück 14 verbunden. Durch eine translationale Relativbewegung zwischen Endstücken 30 und Mittelstück 14 werden die verschiedenen Fahrstellungen (Fig. 6a: zweite Fahrstellung; Fig. 6b: dritte Fahrstellung) eingenommen. Die Endstücke 30 können an den vorderen und hinteren Stirnseiten des Mittelstücks 14 angeordnet sein. Alternativ können die zweiten Rahmenteile 32 unterhalb der stirnseitigen Endabschnitte des Mittelstücks 14 angeordnet sein, wie dies in den Figuren 6a-b gezeigt ist. Der Rotationsfreiheitsgrad um die Pendelachse 40 kann der einzige Bewegungsfreiheitsgrad zwischen den Rahmenteilen 31, 32 sein.

### Bezugszeichenliste:

- 1: Schiene
- 2: Verwindung
- 10: Zweiwegefahrzeug
- 12: Unterwagen
- 14: Mittelstück
- 15: Radachse
- 16: Rad
- 20: Schienenachse
- 21: Schienenrad
- 22: Aktuator
- 24: Schienenachsenantriebsmechanismus
- 30: Endstück
- 31: Erstes Rahmenteil
- 32: Zweites Rahmenteil
- 34: Schwenkachse
- 36: Linearführung
- 37: Parallelogrammführung
- 38: Scherenmechanismus
- 40: Pendelachse
- 41: Drehlager
- 50: Lageranordnung

## Patentansprüche

1. Zweiwegefahrzeug (10), insbesondere Zweiwegebagger, mit einem Unterwagen (12), welcher ein Radfahrwerk mit mindestens zwei Radachsen für die Straßenfahrt und ein Schienenfahrwerk mit einer vorderen und einer hinteren Schienenachse (20) für die Schienenfahrt umfasst, wobei der Unterwagen (12) ein Mittelstück (14) umfasst, an welchem die Radachsen angeordnet sind, wobei das Schienenfahrwerk Aktuatoren (22) umfasst, mittels welchen die Schienenachsen (20) relativ zum Mittelstück (14) zwischen einer ersten Fahrstellung für die Straßenfahrt, einer zweiten Fahrstellung, in der das Zweiwegefahrzeug (10) über die Schienenachsen (20) auf Schienen (1) geführt und über die Radachsen antreibbar ist, und einer dritten Fahrstellung, in der das Zweiwegefahrzeug (10) nur über die Schienenachsen (20) auf Schienen (1) aufsitzt und antreibbar ist, bewegbar sind,
wobei die vordere Schienenachse (20) und die hintere Schienenachse (20) unabhängig voneinander um jeweils eine Pendelachse (40) drehbar gegenüber dem Mittelstück (14) gelagert sind, **dadurch gekennzeichnet, dass** das Schienenfahrwerk derart ausgebildet ist, dass die Pendelachsen (40) unabhängig von der Fahrstellung stets innerhalb einer Mittelebene des Unterwagens (12) parallel, insbesondere koaxial, zueinander verlaufen.

2. Zweiwegefahrzeug (10) nach Anspruch 1, wobei das Schienenfahrwerk ein vorderes und ein hinteres Endstück (30) mit jeweils einem ersten und einem zweiten Rahmenteil (31, 32) umfasst, wobei jeweils die Schienenachse (20) am ersten Rahmenteil (31) gelagert und das zweite Rahmenteil (32) beweglich mit dem Mittelstück (14) verbunden ist und die Rahmenteile (31, 32) beweglich miteinander verbunden sind.

3. Zweiwegefahrzeug (10) nach Anspruch 2, wobei die ersten und zweiten Rahmenteile (31, 32) über ein Drehlager (41) drehbar miteinander verbunden sind, welches die jeweilige Pendelachse (40) definiert, wobei die zweiten Rahmenteile (32) über einen Bewegungsmechanismus, welcher die Aktuatoren (22) zum Einnehmen der verschiedenen Fahrstellungen umfasst, beweglich am Mittelstück (14) gelagert sind, wobei der Bewegungsmechanismus vorzugsweise eine Linearführung (36), eine Parallelführung (37) oder einen Scherenmechanismus (38) umfasst.

4. Zweiwegefahrzeug (10) nach Anspruch 2, wobei die zweiten Rahmenteile (32) jeweils über ein Drehlager (41) drehbar mit dem Mittelstück (14) verbunden sind und die Drehlager (41) die Pendelachsen (40) definieren, wobei vorzugsweise die ersten und zweiten Rahmenteile (31, 32) in Bezug auf die Pendelachsen (40) rotationsstarr miteinander verbunden sind.

5. Zweiwegefahrzeug (10) nach Anspruch 4, wobei die ersten und zweiten Rahmenteile (31, 32) schwenkbar, insbesondere um eine horizontale Schwenkachse (34) schwenkbar miteinander verbunden sind, wobei die verschiedenen Fahrstellungen durch Verschwenken der ersten Rahmenteile (31) relativ zu den zweiten Rahmenteilen (32) erreichbar sind.

6. Zweiwegefahrzeug (10) nach Anspruch 5, wobei die ersten Rahmenteile (31) relativ zu den zweiten Rahmenteilen (32) über die Aktuatoren (22) aktiv verschwenkbar sind, wobei die Aktuatoren (22) als Kolben-Zylinder-Einheiten, insbesondere als hydraulische Schwenkzylinder, ausgebildet sind, welche zwischen den ersten und zweiten Rahmenteilen (31, 32) angeordnet und an diesen jeweils gelenkig gelagert sind.

7. Zweiwegefahrzeug (10) nach einem der Ansprüche 4 bis 6, wobei die Drehlager (41) an vorderen und hinteren Stirnseiten des Mittelstücks (14) angeordnet sind.

8. Zweiwegefahrzeug (10) nach einem der Ansprüche 4 bis 7, wobei die Endstücke (30) jeweils über ein erstes Drehlager (41) und ein entlang der Pendelachse (40) vom ersten Drehlager (41) beabstandetes zweites Drehlager am Mittelstück (14) gelagert sind, wobei wenigstens eine Radachse um eine koaxial zu den Pendelachsen (40) verlaufende Radfahrwerkpendelachse schwenkbar gelagert ist und die zweiten Drehlager auf einem die Radfahrwerkpendelachse bildenden Pendelbolzen oder auf separaten, koaxial dazu gelagerten Bolzen gelagert sind.

9. Zweiwegefahrzeug (10) nach einem der Ansprüche 4 bis 8, wobei das zweite Rahmenteil (32) mindestens eines Endstücks (30), vorzugsweise beider Endstücke (30), über mindestens eine Lageranordnung (50), vorzugsweise über zwei Lageranordnungen (50), mit dem Mittelstück (14) gekoppelt ist, wobei die Lageranordnung (50) zwischen einem Dämpfungsmodus mit vergleichsweise niedriger Steifigkeit und einem Sperrmodus mit vergleichsweise höherer Steifigkeit umschaltbar ist.

10. Zweiwegefahrzeug (10) nach Anspruch 9, wobei die Lageranordnung (50) zwei getrennte Baugruppen umfasst, wobei eine erste Baugruppe die höhere Steifigkeit bereitstellt und vorzugsweise ein Elastomerelement umfasst, und wobei eine zweite Baugruppe die niedrigere Steifigkeit bereitstellt und zum Umschalten in den Sperrmodus deaktivierbar ist.

11. Zweiwegefahrzeug (10) nach Anspruch 10, wobei die zweite Baugruppe ein durch die erste Baugruppe kontaktierbares, verschiebbar gelagertes Kontaktelement umfasst, welches zum Umschalten in den Sperrmodus verriegelbar und zum Umschalten in den Dämpfungsmodus entriegelbar ist.

12. Zweiwegefahrzeug (10) nach Anspruch 11, wobei die zweite Baugruppe einen Hydraulikzylinder mit einem in einem Zylindergehäuse verschiebbar gelagerten Kolben umfasst, welcher das Kontaktelement darstellt oder mit diesem verbunden ist, wobei die zweite Baugruppe vorzugsweise ein Sperrventil umfasst, welches in einer Sperrstellung eine Druckkammer des Hydraulikzylinders sperrt.

13. Zweiwegefahrzeug (10) nach einem der vorhergehenden Ansprüche, wobei zumindest eine der Schienenachsen (20) einen Schienenachsenantriebsmechanismus (24) umfasst und über diesen in der dritten Fahrstellung zum Verfahren des Zweiwegefahrzeugs auf Schienen (1) antreibbar ist, wobei der Schienenachsenantriebsmechanismus (24) insbesondere zusammen mit der Schienenachse (20) um die Pendelachse (40) relativ zum Mittelstück (14) drehbar und über die Aktuatoren (22) relativ zum Mittelstück (14) in die verschiedenen Fahrstellungen bewegbar ist.

14. Zweiwegefahrzeug (10) nach einem der vorhergehenden Ansprüche, ferner umfassend einen drehbar auf dem Unterwagen (12) gelagerten Oberwagen.

15. Schienenfahrwerk für ein Zweiwegefahrzeug (10) nach einem der vorhergehenden Ansprüche, umfassend eine vordere und eine hintere Schienenachse (20) für die Schienenfahrt, Aktuatoren (22), mittels welchen die Schienenachsen (20) relativ zum Mittelstück (14) des Zweiwegefahrzeugs (10) zwischen den verschiedenen Fahrstellungen bewegbar sind, und ein vorderes und ein hinteres Endstück (30) mit jeweils einem ersten und einem zweiten, beweglich miteinander verbundenen Rahmenteil (31, 32), wobei die vordere Schienenachse (20) und die hintere Schienenachse (20) unabhängig voneinander um jeweils eine Pendelachse (40) drehbar gegenüber dem Mittelstück (14) lagerbar sind, **dadurch gekennzeichnet, dass** das Schienenfahrwerk derart ausgebildet ist, dass die Pendelachsen (40) unabhängig von der Fahrstellung stets innerhalb einer Mittelebene des Unterwagens (12) des Zweiwegefahrzeugs (10) parallel zueinander verlaufen, wobei jeweils die Schienenachse (20) am ersten Rahmenteil (31) gelagert und das zweite Rahmenteil (32) beweglich mit dem Mittelstück (14) verbindbar ist, und wobei die zweiten Rahmenteile (32) als Anbaukonsolen mit Verbindungselementen ausgestaltet sind, über die die Endstücke (30) am Unterwagen (12) des Zweiwegefahrzeugs (10) montierbar sind.

## Claims

1. Rail-road vehicle (10), in particular rail-road excavator, comprising an undercarriage (12) which comprises a wheeled chassis having at least two wheel axes for road travel and a rail chassis having a front and a rear rail axis (20) for rail travel, wherein the undercarriage (12) comprises a central piece (14) on which the wheel axes are arranged, wherein the rail chassis comprises actuators (22), by means of which the rail axes (20) are movable relative to the central piece (14) between a first travel position for road travel, a second travel position in which the rail-road vehicle (10) is guided on rails (1) via the rail axes (20) and can be driven via the wheel axes, and a third travel position in which the rail-road vehicle (10) sits on rails (1) and can be driven only via the rail axes (20),
wherein the front rail axis (20) and the rear rail axis (20) are mounted rotatably relative to the central piece (14), independently of one another, about an oscillating axis (40) in each case, **characterized in that** the rail chassis is configured such that the oscillating axes (40) always extend parallel, in particular coaxially, to one another within a central plane of the undercarriage (12), irrespective of the travel position.

2. Rail-road vehicle (10) according to claim 1, wherein the rail chassis comprises a front and a rear end piece (30) each having a first and a second frame part (31, 32), wherein in each case the rail axis (20) is mounted on the first frame part (31), and the second frame part (32) is movably connected to the central piece (14), and the frame parts (31, 32) are movably connected to one another.

3. Rail-road vehicle (10) according to claim 2, wherein the first and second frame parts (31, 32) are rotatably connected to one another via a pivot bearing (41) which defines the respective oscillating axis (40), wherein the second frame parts (32) are movably mounted on the central piece (14) via a movement mechanism which comprises the actuators (22) for assuming the different travel positions, wherein the movement mechanism preferably comprises a linear guide (36), a parallel guide (37) or a scissor mechanism (38).

4. Rail-road vehicle (10) according to claim 2, wherein the second frame parts (32) are each rotatably connected to the central piece (14) via a pivot bearing (41) and the pivot bearings (41) define the oscillating axes (40), wherein preferably the first and second frame parts (31, 32) are connected to one another in a rotationally fixed manner with respect to the oscillating axes (40).

5. Rail-road vehicle (10) according to claim 4, wherein the first and second frame parts (31, 32) are pivotably connected to one another, in particular pivotably about a horizontal pivot axis (34), wherein the different travel positions are reachable by pivoting the first frame parts (31) relative to the second frame parts (32).

6. Rail-road vehicle (10) according to claim 5, wherein the first frame parts (31) are actively pivotable relative to the second frame parts (32) via the actuators (22), wherein the actuators (22) are configured as piston-cylinder units, in particular as hydraulic pivot cylinders, which are arranged between the first and second frame parts (31, 32) and are hingedly mounted on each of them.

7. Rail-road vehicle (10) according to any one of claims 4 to 6, wherein the pivot bearings (41) are arranged on front and rear end faces of the central piece (14).

8. Rail-road vehicle (10) according to any one of claims 4 to 7, wherein the end pieces (30) are each mounted on the central piece (14) via a first pivot bearing (41) and a second pivot bearing spaced apart from the first pivot bearing (41) along the oscillating axis (40), wherein at least one wheel axis is pivotably mounted about a wheeled chassis oscillating axis extending coaxially to the oscillating axes (40), and the second pivot bearings are mounted on an oscillating bolt forming the wheeled chassis oscillating axis or on separate bolts mounted coaxially thereto.

9. Rail-road vehicle (10) according to any one of claims 4 to 8, wherein the second frame part (32) of at least one end piece (30), preferably of both end pieces (30), is coupled to the central piece (14) via at least one bearing arrangement (50), preferably via two bearing arrangements (50), wherein the bearing arrangement (50) is switchable between a damping mode having a comparatively lower rigidity and a locking mode having a comparatively higher rigidity.

10. Rail-road vehicle (10) according to claim 9, wherein the bearing arrangement (50) comprises two separate assemblies, wherein a first assembly provides the higher rigidity and preferably comprises an elastomer element, and wherein a second assembly provides the lower rigidity and is deactivatable for switching into the locking mode.

11. Rail-road vehicle (10) according to claim 10, wherein the second assembly comprises a displaceably mounted contact element contactable by the first assembly, which contact element is lockable for switching into the locking mode and unlockable for switching into the damping mode.

12. Rail-road vehicle (10) according to claim 11, wherein the second assembly comprises a hydraulic cylinder having a piston displaceably mounted in a cylinder housing, which piston represents the contact element or is connected thereto, wherein the second assembly preferably comprises a lock valve which locks a pressure chamber of the hydraulic cylinder in a locking position.

13. Rail-road vehicle (10) according to any one of the preceding claims, wherein at least one of the rail axes (20) comprises a rail axis drive mechanism (24) and can be driven via the latter in the third travel position for moving the rail-road vehicle on rails (1), wherein the rail axis drive mechanism (24) is rotatable, in particular together with the rail axis (20), about the oscillating axis (40) relative to the central piece (14) and is movable relative to the central piece (14) into the different travel positions via the actuators (22).

14. Rail-road vehicle (10) according to any one of the preceding claims, further comprising an upper structure rotatably mounted on the undercarriage (12).

15. Rail chassis for a rail-road vehicle (10) according to any one of the preceding claims, comprising a front and a rear rail axis (20) for rail travel, actuators (22) by means of which the rail axes (20) are movable relative to the central piece (14) of the rail-road vehicle (10) between the different travel positions, and a front and a rear end piece (30) each having a first and a second frame part (31, 32) movably connected to one another, wherein the front rail axis (20) and the rear rail axis (20) are mountable rotatably relative to the central piece (14), independently of one another, about an oscillating axis (40) in each case, **characterized in that** the rail chassis is configured such that the oscillating axes (40) always extend parallel to one another within a central plane of the undercarriage (12) of the rail-road vehicle (10), irrespective of the travel position, wherein in each case the rail axis (20) is mounted on the first frame part (31) and the second frame part (32) is movably connectable to the central piece (14), and wherein the second frame parts (32) are configured as add-on consoles having connection elements via which the end pieces (30) are mountable on the undercarriage (12) of the rail-road vehicle (10).

## Revendications

1. Véhicule rail-route (10), en particulier pelle rail-route, avec un châssis inférieur (12), lequel comprend un châssis sur roues avec au moins deux essieux de roues pour la circulation routière et un châssis ferroviaire avec un essieu ferroviaire (20) avant et un essieu ferroviaire (20) arrière pour la circulation ferroviaire, dans lequel le châssis inférieur (12) comprend une pièce centrale (14) sur laquelle les essieux de roues sont disposés, dans lequel le châssis ferroviaire comprend des actionneurs (22), au moyen desquels les essieux ferroviaires (20) sont mobiles par rapport à la pièce centrale (14) entre une première position de circulation pour la circulation routière, une deuxième position de circulation, dans laquelle le véhicule rail-route (10) est guidé sur des rails (1) par l'intermédiaire des essieux ferroviaires (20) et peut être entraîné par l'intermédiaire des essieux de roues, et une troisième position de circulation, dans laquelle le véhicule rail-route (10) repose sur des rails (1) et peut être entraîné uniquement par l'intermédiaire des essieux ferroviaires (20),
dans lequel l'essieu ferroviaire (20) avant et l'essieu ferroviaire (20) arrière sont montés de manière rotative par rapport à la pièce centrale (14), indépendamment l'un de l'autre, autour d'un axe pendulaire (40) respectif, **caractérisé en ce que** le châssis ferroviaire est configuré de telle manière que les axes pendulaires (40) s'étendent toujours parallèlement, en particulier coaxialement, l'un par rapport à l'autre au sein d'un plan médian du châssis inférieur (12), indépendamment de la position de circulation.

2. Véhicule rail-route (10) selon la revendication 1, dans lequel le châssis ferroviaire comprend une pièce d'extrémité (30) avant et une pièce d'extrémité (30) arrière avec chacune une première et une deuxième partie de châssis (31, 32), dans lequel, dans chaque cas, l'essieu ferroviaire (20) est monté sur la première partie de châssis (31), et la deuxième partie de châssis (32) est reliée de manière mobile à la pièce centrale (14), et les parties de châssis (31, 32) sont reliées entre elles de manière mobile.

3. Véhicule rail-route (10) selon la revendication 2, dans lequel les premières et deuxièmes parties de châssis (31, 32) sont reliées entre elles de manière rotative par l'intermédiaire d'un palier de rotation (41) qui définit l'axe pendulaire (40) respectif, dans lequel les deuxièmes parties de châssis (32) sont montées de manière mobile sur la pièce centrale (14) par l'intermédiaire d'un mécanisme de déplacement qui comprend les actionneurs (22) pour adopter les différentes positions de circulation, dans lequel le mécanisme de déplacement comprend de préférence un guidage linéaire (36), un guidage parallèle (37) ou un mécanisme en ciseaux (38).

4. Véhicule rail-route (10) selon la revendication 2, dans lequel les deuxièmes parties de châssis (32) sont chacune reliées de manière rotative à la pièce centrale (14) par l'intermédiaire d'un palier de rotation (41) et les paliers de rotation (41) définissent les axes pendulaires (40), dans lequel, de préférence, les premières et deuxièmes parties de châssis (31, 32) sont reliées entre elles de manière fixe en rotation par rapport aux axes pendulaires (40).

5. Véhicule rail-route (10) selon la revendication 4, dans lequel les premières et deuxièmes parties de châssis (31, 32) sont reliées entre elles de manière pivotante, en particulier de manière pivotante autour d'un axe de pivotement horizontal (34), dans lequel les différentes positions de circulation peuvent être atteintes par pivotement des premières parties de châssis (31) par rapport aux deuxièmes parties de châssis (32).

6. Véhicule rail-route (10) selon la revendication 5, dans lequel les premières parties de châssis (31) peuvent pivoter activement par rapport aux deuxièmes parties de châssis (32) par l'intermédiaire des actionneurs (22), dans lequel les actionneurs (22) sont configurés sous la forme d'unités piston-cylindre, en particulier sous la forme de vérins de pivotement hydrauliques, qui sont disposées entre les premières et deuxièmes parties de châssis (31, 32) et sont montées chacune de manière articulée sur celles-ci.

7. Véhicule rail-route (10) selon l'une quelconque des revendications 4 à 6, dans lequel les paliers de rotation (41) sont disposés sur des faces frontales avant et arrière de la pièce centrale (14).

8. Véhicule rail-route (10) selon l'une quelconque des revendications 4 à 7, dans lequel les pièces d'extrémité (30) sont montées chacune sur la pièce centrale (14) par l'intermédiaire d'un premier palier de rotation (41) et d'un deuxième palier de rotation espacé du premier palier de rotation (41) le long de l'axe pendulaire (40), dans lequel au moins un essieu de roues est monté de manière pivotante autour d'un axe pendulaire de châssis sur roues s'étendant coaxialement aux axes pendulaires (40), et les deuxièmes paliers de rotation sont montés sur un axe pendulaire formant l'axe pendulaire de châssis sur roues ou sur des axes séparés montés coaxialement à celui-ci.

9. Véhicule rail-route (10) selon l'une quelconque des revendications 4 à 8, dans lequel la deuxième partie de châssis (32) d'au moins une pièce d'extrémité (30), de préférence des deux pièces d'extrémité (30), est couplée à la pièce centrale (14) par l'intermédiaire d'au moins un agencement de palier (50), de préférence par l'intermédiaire de deux agencements de palier (50), dans lequel l'agencement de palier (50) est commutable entre un mode d'amortissement avec une rigidité comparativement plus faible et un mode de blocage avec une rigidité comparativement plus élevée.

10. Véhicule rail-route (10) selon la revendication 9, dans lequel l'agencement de palier (50) comprend deux sous-ensembles distincts, dans lequel un premier sous-ensemble fournit la rigidité plus élevée et comprend de préférence un élément élastomère, et dans lequel un deuxième sous-ensemble fournit la rigidité plus faible et peut être désactivé pour commuter dans le mode de blocage.

11. Véhicule rail-route (10) selon la revendication 10, dans lequel le deuxième sous-ensemble comprend un élément de contact monté de manière coulissante, pouvant être mis en contact par le premier sous-ensemble, lequel peut être verrouillé pour commuter dans le mode de blocage et peut être déverrouillé pour commuter dans le mode d'amortissement.

12. Véhicule rail-route (10) selon la revendication 11, dans lequel le deuxième sous-ensemble comprend un vérin hydraulique avec un piston monté de manière coulissante dans un boîtier de vérin, lequel représente l'élément de contact ou est relié à celui-ci, dans lequel le deuxième sous-ensemble comprend de préférence une soupape de blocage qui bloque une chambre de pression du vérin hydraulique dans une position de blocage.

13. Véhicule rail-route (10) selon l'une quelconque des revendications précédentes, dans lequel au moins l'un des essieux ferroviaires (20) comprend un mécanisme d'entraînement d'essieu ferroviaire (24) et peut être entraîné par l'intermédiaire de celui-ci dans la troisième position de circulation pour déplacer le véhicule rail-route sur des rails (1), dans lequel le mécanisme d'entraînement d'essieu ferroviaire (24) est rotatif par rapport à la pièce centrale (14), en particulier conjointement avec l'essieu ferroviaire (20), autour de l'axe pendulaire (40) et est mobile par rapport à la pièce centrale (14) dans les différentes positions de circulation par l'intermédiaire des actionneurs (22).

14. Véhicule rail-route (10) selon l'une quelconque des revendications précédentes, comprenant en outre une structure supérieure montée de manière rotative sur le châssis inférieur (12).

15. Châssis ferroviaire pour un véhicule rail-route (10) selon l'une quelconque des revendications précédentes, comprenant un essieu ferroviaire (20) avant et un essieu ferroviaire (20) arrière pour la circulation ferroviaire, des actionneurs (22), au moyen desquels les essieux ferroviaires (20) sont mobiles par rapport à la pièce centrale (14) du véhicule rail-route (10) entre les différentes positions de circulation, et une pièce d'extrémité (30) avant et une pièce d'extrémité (30) arrière avec chacune une première et une deuxième partie de châssis (31, 32) reliées entre elles de manière mobile, dans lequel l'essieu ferroviaire (20) avant et l'essieu ferroviaire (20) arrière peuvent être montés de manière rotative par rapport à la pièce centrale (14), indépendamment l'un de l'autre, autour d'un axe pendulaire (40) respectif, **caractérisé en ce que** le châssis ferroviaire est configuré de telle manière que les axes pendulaires (40) s'étendent toujours parallèlement les uns aux autres au sein d'un plan médian du châssis inférieur (12) du véhicule rail-route (10), indépendamment de la position de circulation, dans lequel, dans chaque cas, l'essieu ferroviaire (20) est monté sur la première partie de châssis (31) et la deuxième partie de châssis (32) peut être reliée de manière mobile à la pièce centrale (14), et dans lequel les deuxièmes parties de châssis (32) sont configurées sous la forme de consoles de montage avec des éléments de liaison par l'intermédiaire desquels les pièces d'extrémité (30) peuvent être montées sur le châssis inférieur (12) du véhicule rail-route (10).
